# EUROPEAN PATENT APPLICATION

(11) **EP 1 469 098 A2**
(43) Date of publication of application: **20.10.2004**
(21) Application number: 04251639.3
(22) Date of filing: 22.03.2004
(51) Int. Cl.: C23C 4/04, A62C 8/00, A62C 2/06, E04B 1/94

(54) **A coating material and a method of manufacturing the same**

(30) Priority: 20.03.2003 JP 2003078630; 02.03.2004 JP 2004057866
(71) Applicant: Min-Eki Co., Ltd., Tokyo (JP)
(72) Inventor: Koyanagi, Yasuhiro, Tama-shi, Tokyo (JP)
(74) Representative: Lord, Hilton David

(57) **Abstract**

A coating material includes sodium in a range of from 0.1% to 10%; magnesium in a range of from 0.01% to 1%; aluminum in a range of from 0.1% to 15%; potassium in a range of from 1% to 30%; silicon in a range of from 10% to 30%; and iron in a range of from 0.1% to 1%.

## Description

### CROSS REFERENCE TO RELATED APPLICATIONS

This application is based upon and claims the benefit of priority from the prior Japanese Patent Applications No. P2003-078630 filed on March 20, 2003, and No. P2004-057866 filed on March 2, 2004; the entire contents of which are incorporated herein by reference.

### BACKGROUND OF THE INVENTION

### 1. Field of the Invention

The present invention relates to a coating material, more specifically to a coating film of the coating material having a property of radiating heat and transferring thermal energy at a high temperature of 1000°C and above.

### 2. Description of the Related Art

Heat-resistant materials made of inorganic materials are used, for example, as jet engine exhaust tubes, rocket launching tubes, waste incinerators or waste melting furnaces, which are exposed to a high temperature of 400°C and above. For example, in the case of a space shuttle whose surface temperature is increased to 1200°C upon atmospheric reentry, heat-resistant materials called carbon fibers are placed on the entire surface of the airframe.

The heat-resistant materials made of inorganic materials are widely applied to building components as well. For example, techniques of using tiles, asbestos and the like for the interior and exterior of a building are known. A method of applying a coating material made of inorganic salts such as sodium carbonate on a surface of an asbestos plate or the like for use in a heat-resistant building component is also known.

Corrosive gases such as sulfide gas or chlorine gas are generated in apparatuses exposed to a high temperature condition of 400°C and above. Accordingly, metallic materials used in the apparatuses are heavily corroded and quickly deteriorated. For this reason, damages, to the apparatus is prevented by coating a surface thereof with an inorganic heat-resistant material or the like. For example, the above-mentioned heat-resistant tiles used on the airframe surface of the space shuttle are formed by joining small size inorganic materials, each having 30cm square area.

However, the heat-resistant tiles formed by joining certain shapes of materials tend to cause gaps between the tiles. When there is a gap between the tiles, the heat can easily break into the airframe. Accordingly, the heat resistance may not be maintained and the airframe may be damaged.

The recently used inorganic materials such as tiles or asbestos for building components generate poisonous gases when exposed to a high temperature. Even concrete, reinforcing steel bars, and steel frames which are widely used as structures for buildings exhibit phenomena to lose strength rapidly when exposed to a high temperature, as in the case of a fire.

In particular, reinforcing steel bars may be suddenly softened when the temperature exceeds 700°C, and may collapse as a result of a failure to bear the weight thereof. For example, in the tragedy of the World Trade Center that occurred in September 2001, the buildings were suddenly heated to a temperature range of from 500°C to 1200°C due to aircraft crashes. The buildings are considered to have collapsed because the steel frames positioned inside and outside the buildings were rapidly softened.

Accordingly, a method of improving corrosion resistance and heat resistance by means of coating an inorganic heat-resistant coating material on surfaces of apparatuses used under high temperature conditions and of buildings has been attempted. For example, it is possible to construct a building which has excellent heat resistance and of generating poisonous gases by providing a coating of a heat-resistant material using the above-described inorganic salts, such as sodium carbonate, on a surface of the building. However, an applied film employing a heat-resistant coating material which is generally used today can hardly withstand a high temperature condition of 840°C and above. Moreover, a heat radiation material such as an applied film capable of withstanding a high temperature environment of 1000°C and above has not been available.

An object of the present invention is to provide a coating material which achieves previously unknown film characteristics excellent in heat radiation in a high temperature environment of 1000°C and above, and to provide a manufacturing method thereof.

### SUMMARY OF THE INVENTION

An aspect of the present invention inheres in a coating material, which based on a result of a fluorescent X-ray analysis in an incinerated state after drying, encompassing sodium in a range of from 0.1% to 10%; magnesium in a range of from 0.01% to 1%; aluminum in a range of from 0.1% to 15%; potassium in a range of from 1% to 30%; silicon in a range of from 10% to 30%; and iron in a range of from 0.1% to 1%.

Another aspect of the present invention inheres in a method of manufacturing a coating material encompassing: agitating a mixture of a nonmetal coating material and aluminum oxide powder in a mixing tank; agitating to mix an adhesive including water, caustic soda, high-protein powder, polyvinyl acetate, and glycerin; adding and agitating ceramic powder; and grinding the mixture.

### BRIEF DESCRIPTION OF DRAWINGS

Fig.1 shows an example of components identification list of a metal coating material according to a first embodiment of the present invention.
Fig.2 shows an example of fluorescence X-rays spectrum of a qualitative analysis result of the metal coating material according to the first embodiment of the present invention.
Fig.3 shows an example list of a qualitative analysis result of the metal coating material according to the first embodiment of the present invention.
Fig.4 shows an example list of a quantitative analysis result of the metal coating material according to the first embodiment of the present invention.
Fig.5 shows an example of a grain size distribution of the metal coating material according to the first embodiment of the present invention.
Fig.6 shows a picture of a surface morphology of an applied film (coating material) of the metal coating material according to the first embodiment of the present invention, observed by a scanning electron microscope.
Fig.7 shows a picture of a surface morphology of the applied film shown in Fig. 6 after applying heat radiation at 900°C, observed by the scanning electron microscope.
Fig. 8 is a graph showing data examples of wavelength dependency of transmittance at the surface of the applied film of the metal coating material at 50°C according to the first embodiment of the present invention.
Fig.9 is a graph showing data examples of wavelength dependency of transmittance at the surface of the applied film at 300°C of the metal coating material according to the first embodiment of the present invention.
Fig.10 shows data examples of wavelength dependency of intensity at the surface of the applied film of the metal coating metal material at 50°C according to the first embodiment of the present invention.
Fig.11 shows data examples of wavelength dependency of intensity at the surface of the applied film of the metal coating metal material at 300°C according to the first embodiment of the present invention.
Fig.12 shows a schematic view of a temperature measurement apparatus which can measure the surface temperature of the applied film of the metal coating material according to the first embodiment of the present invention.
Fig.13 shows a result of temperature changes at the surface of the applied film of the metal coating material measured by the temperature measurement apparatus as shown in Fig.12.
Fig.14 shows a list of materials for manufacturing the metal coating material according to the first embodiment, a nonmetal coating material according to a second embodiment, and a binder according to a third embodiment.
Fig. 15 shows a list of ingredients of a "high-protein powder" per 100g as shown in Fig.14.
Fig.16 shows an example list of a qualitative analysis result of the nonmetal coating material according to the second embodiment of the present invention.
Fig.17 shows an example list of a quantitative analysis result of the nonmetal coating material according to the second embodiment of the present invention.
Fig.18 shows an example list of a qualitative analysis result of the binder according to the third embodiment of the present invention.
Fig.19 shows an example list of a quantitative analysis result of the binder according to the third embodiment of the present invention.
Fig.20 shows a result of heat-radiative test of a waste paper board and a heat-radiative charcoal board which are manufactured by the binder according to the third embodiment of the present invention.
Fig.21 shows an example of components identification list of a heat-insulating material according to a fourth embodiment of the present invention.
Fig.22 shows an example list of a qualitative analysis result of the heat-insulating material according to the fourth embodiment of the present invention.
Fig.23 shows a graph of heat radiation characteristic of the heat-insulating material according to the fourth embodiment of the present invention.
Fig.24 shows an example list of materials for manufacturing the heat-insulating material according to the fourth embodiment of the present invention.

### DETAILED DESCRIPTION OF THE INVENTION

Various embodiments of the present invention will be described with reference to the accompanying drawings. It is to be noted that the same or similar reference numerals are applied to the same or similar parts and elements throughout the drawings, and description of the same or similar parts and elements will be omitted or simplified. However, it will be obvious to those skilled in the art that the present invention may be practiced without such specific details.

### (FIRST EMBODIMENT)

A metal coating material according to a first embodiment of the present invention includes silicon dioxide (α-quartz (SiO₂)), corundum (α-Al₂O₃), and rutile (TiO₂) as major components. In addition, the coating material includes anatase (TiO₂), muscovite (KAl₂Si₃AlO₁₀(OH)₂), albite (NaAlSi₃O₈), and kaolinite (Al₂Si₂O₅(OH)₄) as minor components.

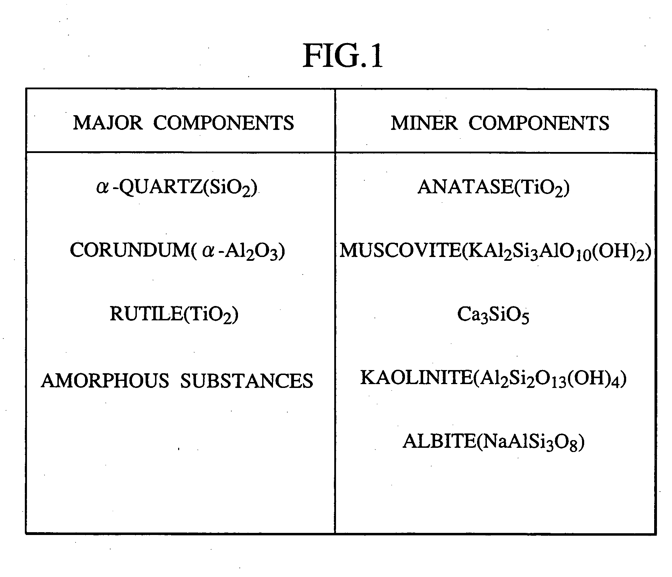

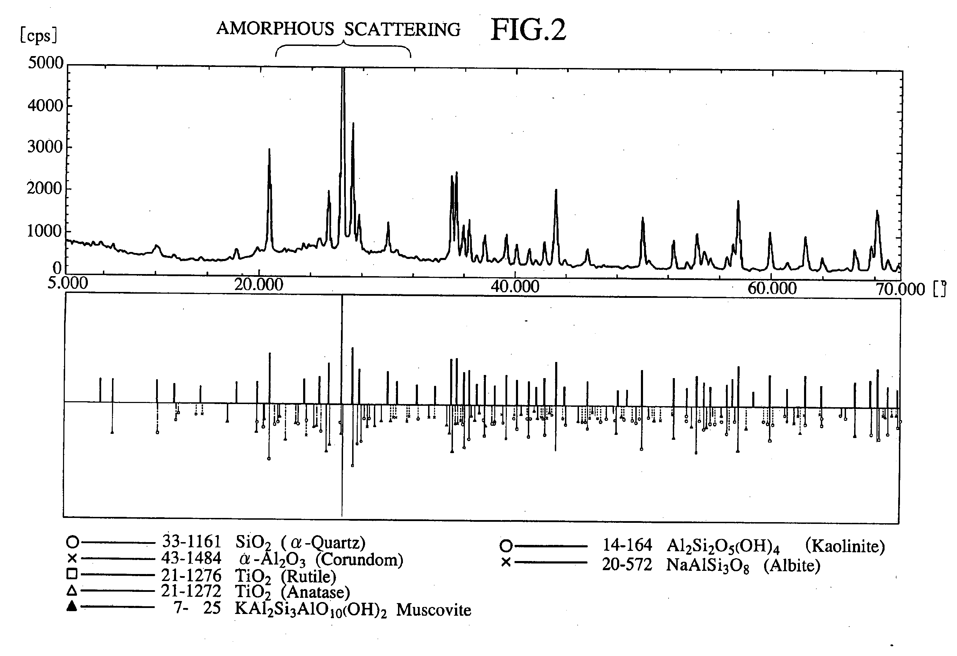

Fig. 1 and Fig. 2 show an example of a result of component identification. The identification was obtained by filtrating and drying the metal coating material according to the first embodiment, then grinding the coating material for 5 minutes with a sample mill , (TI-100, made by CMT Inc.) , and then measuring the ground coating material with an X-ray analyzer RAD-rR made by Rikagaku Corporation. Here, amorphous scattering is confirmed as shown in Fig. 2. Accordingly, it is apparent that the coating material includes a large quantity of amorphous substances.

Moreover, as a result of a fluorescent X-ray analysis of the coating material in an incinerated state after drying at 105°C for 5 hours and heating at an ignition temperature of 700°C, the metal coating material according to the first embodiment includes sodium (Na) in a range of from 0.1% to 5.0%, magnesium (Mg) in a range of from 0.01% to 0.10%, aluminum (A1) in a range of from 1.0% to 10.0%, silicon (Si) in a range of from 10% to 30%, phosphorus (P) in a range of from 0.01% to 5.0%, chlorine (Cl) in a range of from 0.01% to 1.0%, potassium (K) in a range of from 0.1% to 10%, calcium (Ca) in a range of from 0.1% to 10%, titanium (Ti) in a range of from 0.1% to 10%, zinc (Zn) in a range of from 0.1% to 10%, and molybdenum (Mo) in a range of from 0.1% to 5.0%.

The metal coating material further includes iron (Fe) in a range of from 0.01% to 2.0%, strontium (Sr) in a range of from 0.001% to 0.05%, zirconium (Zr) in a range of from 0.001% to 0.05%, and niobium (Nb) in a range of from 0.001% to 0.05%.

Here, Na is included preferably in a range of from 0.5% to 2.0%, and more preferably in a range of from 0.7% to 1.5%. Mg is included preferably in a range of from 0.01% to 0.08%, and more preferably in a range of from 0.015% to 0.040%. Al is included preferably in a range of from 1.0% to 8.0%, and more preferably in a range of from 2.5% to 6.5%.

Si is included preferably in a range of from 12% to 25%, and more preferably in a range of from 15% to 20%. P is included preferably in a range of from 0.01% to 0.50%, and more preferably in a range of from 0.08% to 0.25%. Cl is included preferably in a range of from 0.02% to 0.50%, and more preferably in a range of from 0.04% to 0.15%. K is included preferably in a range of from 0.5% to 8.0%, and more preferably in a range of from 1.0% to 5.0%.

Ca is included preferably in a range of from 0.5% to 10%, and more preferably in a range of from 2.0% to 7.0%. Ti is included preferably in a range of from 0.5% to 10%, and more preferably in a range of from 2.0% to 8.0%. Fe is included preferably in a range of from 0.02% to 1.00%, and more preferably in a range of from 0.05% to 0.30%. Zn is included preferably in a range of from 0.5% to 8.0%, and more preferably in a range of from 2.0% to 5.0%.

Sr is included preferably in a range of from 0.001% to 0.030%, and more preferably in a range of from 0.005% to 0.020%. Zr is included preferably in a range of from 0.001% to 0.040%, and more preferably in a range of from 0.005% to 0.020%. Nb is included preferably in a range of from 0.005% to 0.030%, and more preferably in a range of from 0.01% to 0.025%. Mo is included preferably in a range of from 0.3% to 3.0%, and more preferably in a range of from 0.5% to 1.5%.

Here, the forgoing numerical values (mass%(mm/mm)) can be obtained by a qualitative analysis for elements having an atomic numbers equal to or greater than 6 (carbon) using a fundamental parameter (FP) method. The "FP method" is a method of obtaining theoretical X-ray intensity from a theoretical formula of fluorescent X-ray intensity by use of physical constants such as a mass absorption coefficient or spectral distribution of an X-ray source, and calculating contents by performing comparison and convergence in terms of measured X-ray intensity.

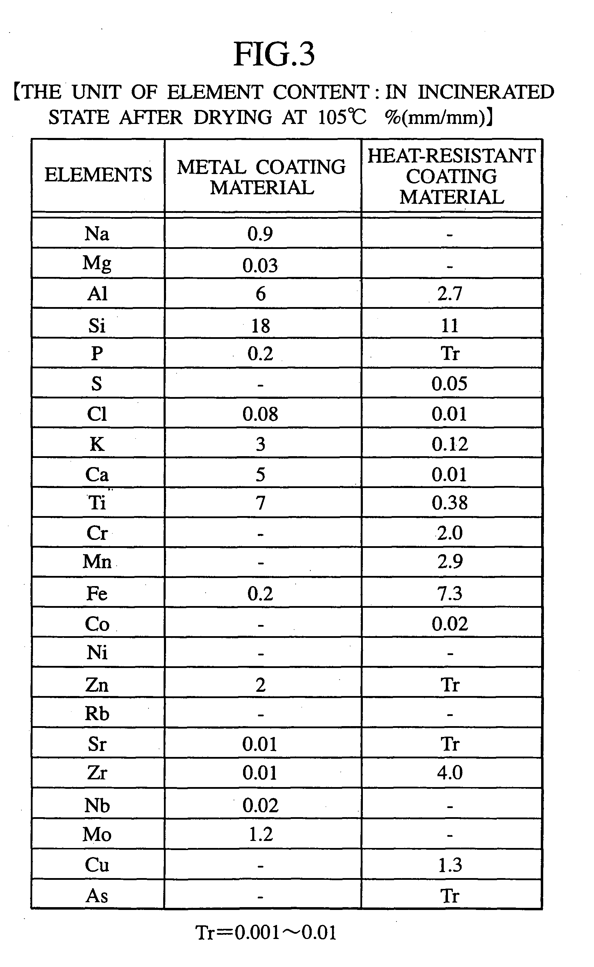

Fig. 3 shows typical numerical values of the metal coating material according to the first embodiment. In Fig. 3, the calculation is made on the assumption that a content of hydrogen is 0 mass%, and analytical values for carbon and oxygen are not indicated.

From the numerical values exemplified in Fig. 3, it is preferable that, in relation to Si, a nonmetal coating material according to the first embodiment includes Na in a range of from 4.0% to 8.0%, Mg in a range of from 0.1% to 0.5%, Cl in a range of from 0.3% to 0.6%, and K in a range of from 0.1% to 0.5%. It is more preferable that, in relation to Si, the metal coating material according to the first embodiment includes Na in a range of from 4.5% to 6.0%, Mg in a range of from 0.1% to 0.3%, Cl in a range of from 0.4% to 0.6%, and K in a range of from 0.1% to 0.3%.

As a comparative example, an analysis result of a heat-resistant coating material is also shown in Fig. 3. Na and Mg included in the metal coating material according to the first embodiment are not included in the heat-resistant coating material. Moreover, while Fe is included in a minute amount of 0.2% in the example of the metal coating material according to the first embodiment, Fe is included in a larger amount of 7.3% in the heat-resistant coating material.

In addition, while 4.0% of Zr is included in the heat-resistant coating material, Zr is included in a minute amount of 0.001% to 0.010% in the metal coating material according to the first embodiment. Moreover, while copper (Cu) and arsenic (As) are included in the heat-resistant coating material, Cu or As is not included in the metal coating material according to the first embodiment at all.

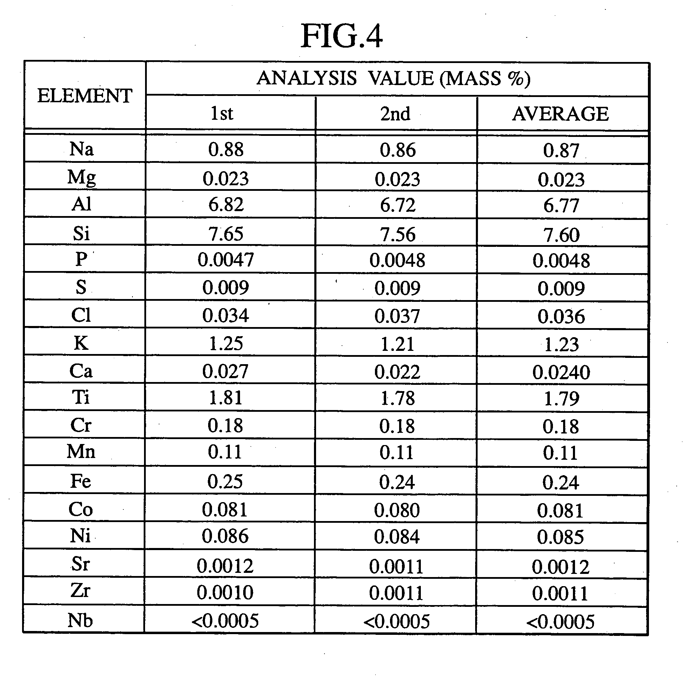

In addition, Fig.4 shows an example of the quantitative analysis result of the metal coating material according to the first embodiment. The result as shown in Fig.4 is measured by an ICP optical emission spectrometer (SPS4000, made by SII Nanotechnology Inc.), polarized zeeman atomic absorption spectrophotometer (180-80, made by Hitachi Ltd.), and a X-ray fluorescence spectrometer (RIX-3000, made by Rigaku Corporation.).

The amount of Si is measured by ICP optical emission spectroscopy. The sample for analyzing Si is obtained as follows; mixing the metal coating material, weighing out the metal coating material to a Pt melting pot, adding sulfuric acid and heating to carbonize and incinerate, dissolving the incinerated resultant in a sodium carbonate and dissolving the resultant in water, adding nitric acid and hydrochloric acid to make the resultant an acidulous salt, and taking the resultant as a fixed quantity. The sample is diluted with nitric acid before analysis.

The amount of K and Ca are measured by the polarized zeeman atomic absorption spectrophotometer. The samples of K and Ca are obtained as follows ; mixing the metal coating material, weighing out the metal coating material to a vessel, adding nitric acid, sulfuric acid, and hydrofluoric acid and heating to decompose compositions of the coating material, and dissolving the resultant in the nitric acid and taking the resultant as a fixed quantity. After that, the resultant is heated and decomposed by adding nitric acid, sulfuric acid, and hydrofluoric acid to prevent precipitation.

The amount of Mg, Al, P, Ca, Ti, Cr, Mn, Fe, Co, Ni, Se, Zr, and Nb is measured by the ICP optical emission spectroscopy. The samples of these elements are obtained as follows; mixing the metal coating material and weighing out the metal coating material to the vessel, adding nitric acid, sulfuric acid, and hydrofluoric acid and heating to decompose compositions of the metal coating material, dissolving the resultant in the nitric acid and taking the resultant as a fixed quantity, and adding nitric acid, sulfuric acid, and hydrofluoric acid and heating to decompose compositions of the resultant and dissolving the resultant in the nitric acid. The resultant is diluted with the sulfur potassium and nitric acid before analysis.

Cl and S are weighed and sampled in a measurement cell and measured by the X-ray fluorescence spectrometer with helium (He) atmosphere. The samples of Cl and S are obtained as follows; mixing the metal coating material and weighing the metal coating material on an aluminum board having dimensions of 30mm square, and drying the metal coating material with an infrared lamp.

As a result of quantitative analysis using the above-described apparatus, the metal coating material includes Na in a range of from 0.8% to 1.0%, Mg in a range of from 0.01% to 0.03%, Al in a range of from 5.0% to 8.0%, Si in a range of from 5.0% to 9.0%, P in a range of from 0.0030% to 0.0060%, Cl in a range of from 0.020% to 0.050%, K in a range of from 0.90% to 1.50%, Ca in a range of from 0.002% to 0.003%, Ti in a range of from 1.50% to 2.00%, and Zr in a range of from 0.0006% to 0.002%. ,

The metal coating material further includes S in a range of from 0.007% to 0.012%, Cr in a range of from 0.15% to 0.2%, Mn in a range of from 0.080% to 0.15%, Fe in a range of from 0.20% to 0.30%, Co in a range of from 0.070% to 0.090%, Ni in a range of from 0.070% to 0.10%, Sr in a range of from 0.0007% to 0.002%, and Nb in a range of from 0.0001% to 0.0005%.

Here, Na is included preferably in a range of from 0.85% to 0.90%. Mg is included preferably in a range of from 0.020% to 0.025%, Al is included preferably in a range of from 6.0% to 7.0%, Si is included preferably in a range of from 7.5% to 7.7%. P is included preferably in a range of from 0.0045% to 0.0050%. S is preferably in a range of from 0.0075% to 0.010%. Cl is included preferably in a range of from 0.030% to 0.038%. K is included preferably in a range of from 1.20% to 1.30%. Ca is included preferably in a range of from 0.0021% to 0.0028%. Ti is included preferably in a range of from 1.75% to 1.85%. Cr is preferably in a range of from 0.16% to 0.19%. Mn is preferably in a range of from 0.090% to 0.12%. Fe is included preferably in a range of from 0.21% to 0.28%. Co is more preferably in a range of from 0.075% to 0.085%. Ni is included preferably in a range of from 0.080% to 0.090%. Sr is included preferably in a range of from 0.0009% to 0.0015%. Zr is included preferably in a range of from 0.0008% to 0.0015%. Nb is included preferably in a range of from 0.0001% to 0.0005%.

### <Grain size distribution of the coating material>

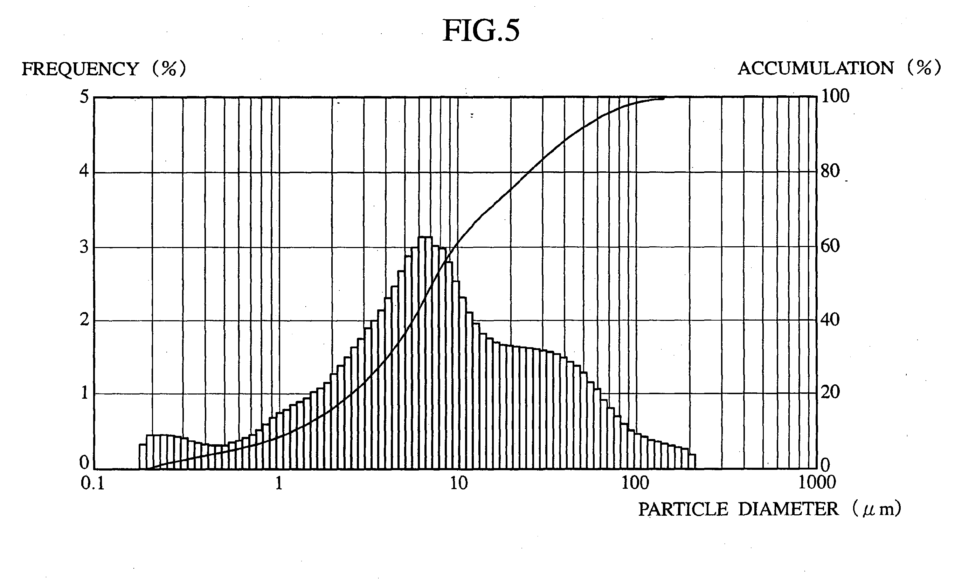

As exemplified in Fig. 5, the metal coating material according to the first embodiment includes powder having grain sizes in a range of from 0.15 to 200 µm. Grain size distribution shown in Fig. 5 has a main peak at the grain size of 7 µm and a shoulder sub peak in the vicinity of the grain size of 30 µm. Note that the example shown in Fig. 5 exemplifies a result of measurement of the coating material according to the first embodiment at a temperature of 42.1°C and a viscosity of 3800 cps, which is produced by grinding the metal coating material according to the first embodiment for 18 minutes at 1976 rpm with a bead mill using beads of zirconium oxide (ZrO₂) having diameters of 0.5 mm.

### <Surface morphology of an applied film (coating film) formed by applying the coating material>

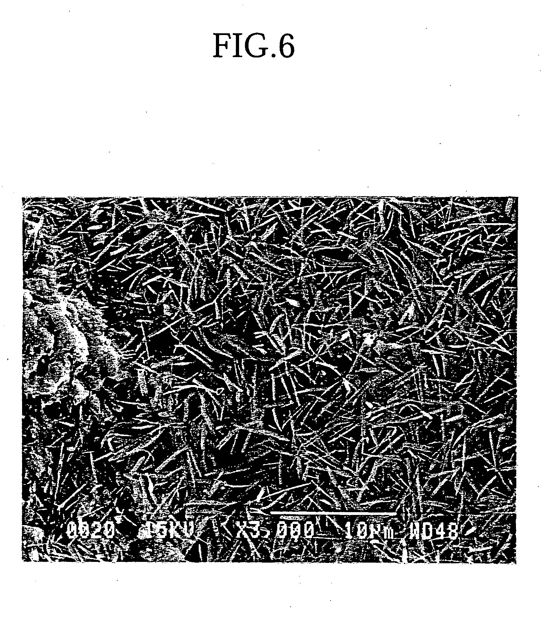

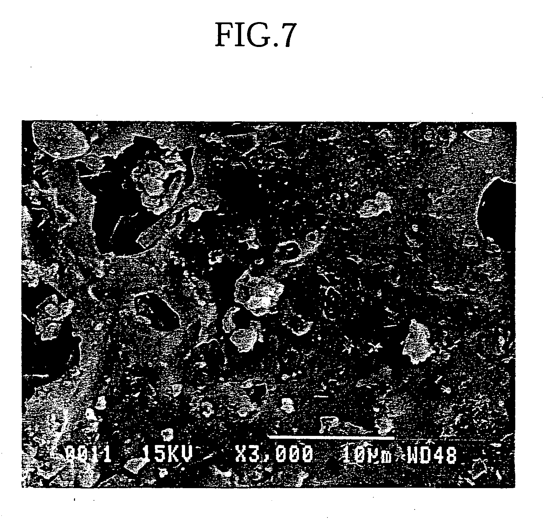

Fig. 6 and Fig. 7 show observation results of a surface of an applied film (coating film), which is obtained by applying the metal coating material according to the first embodiment on an iron plate and then drying the coating material. The observation was performed with a scanning electron microscope (JSM-840, made by JEOL Ltd.).

From Fig. 6 and Fig. 7, it is apparent that the coating material includes unevenly scattered linear minerals having lengths in a range of from 1 to 7 µm, flake minerals having diameters in a range of from 1 to 5 µm, and block minerals having diameters in a range of from 10 to 15 µm. As shown in Fig. 6, the block mineral includes a laminated structure. As shown in Fig. 7, linear minerals, flake minerals, or block minerals do not exist on the surface of the applied film using the coating material according to the first embodiment when heat radiation at 900°C is applied to the surface. Instead, minerals of irregular block shapes having diameters in a range of from 1 to 5 µm sparsely exist thereon. Moreover, thin-film minerals cover almost the entire surface.

### <Characteristics of the applied film>

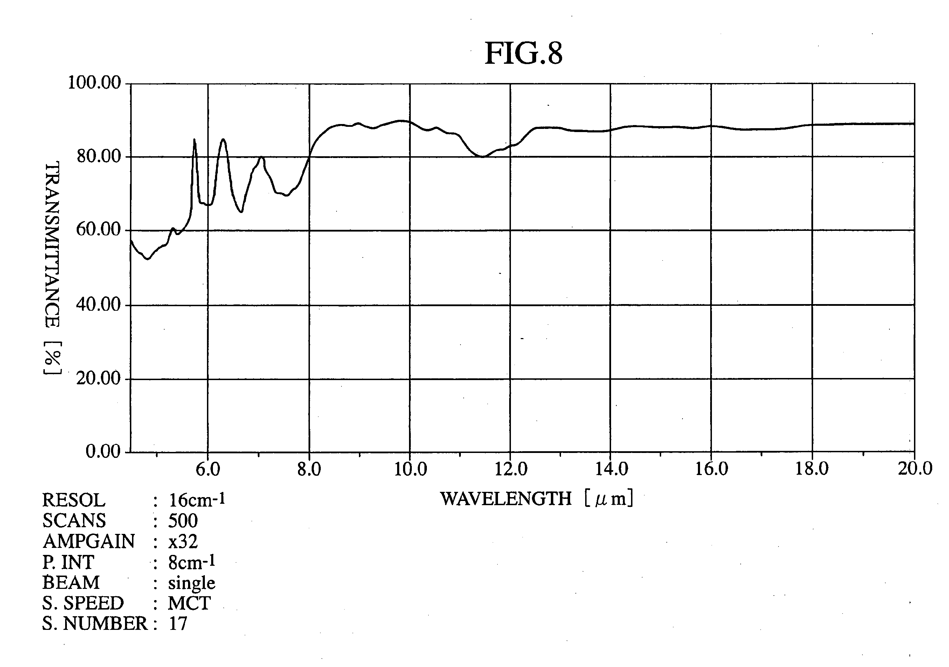

Fig. 8 to Fig. 11 show data examples of wavelength dependency of spectral emissivity (transmittance and intensity) when the metal coating material according to the first embodiment is applied on an aluminum plate and a surface temperature is set to 50°C and to 300°C. The aluminum plate coated with the metal coating material according to the first embodiment was measured by use of a Fourier transform infrared spectrophotometer (JIR5500, made by JEOL Ltd.) and an infrared radiation unit (IR-IRR200, made by JEOL Ltd.).

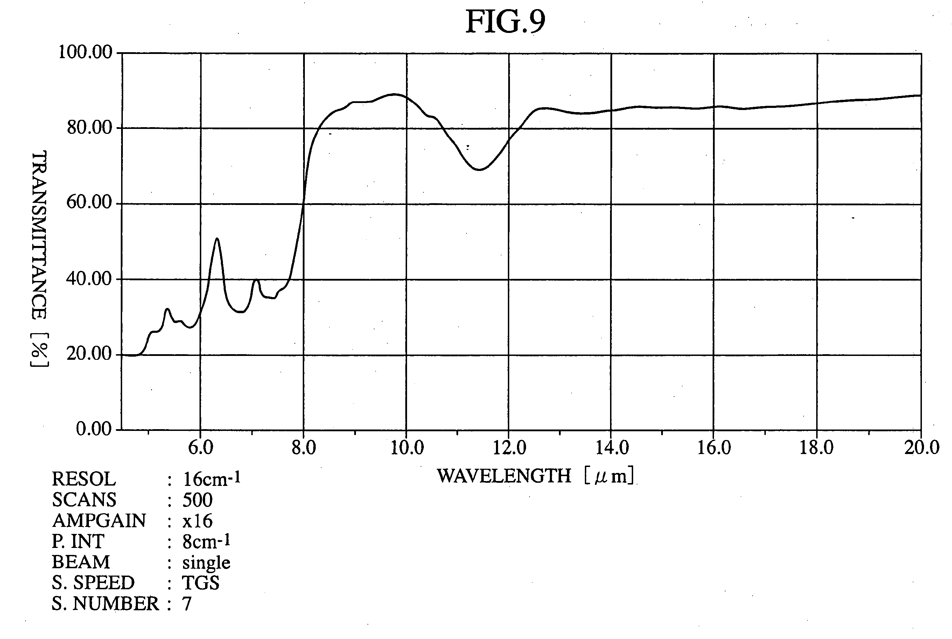

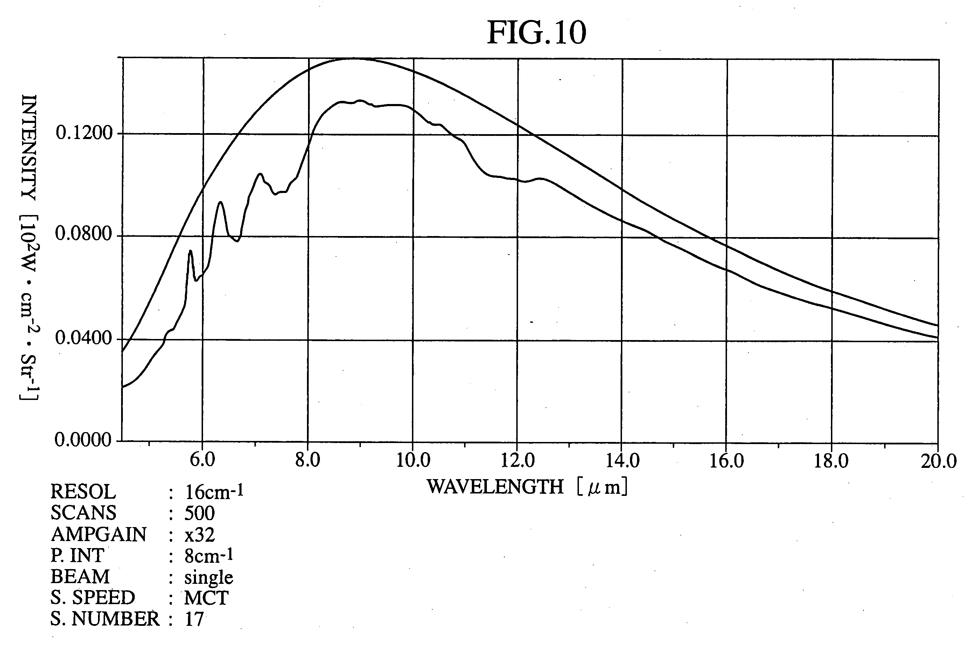

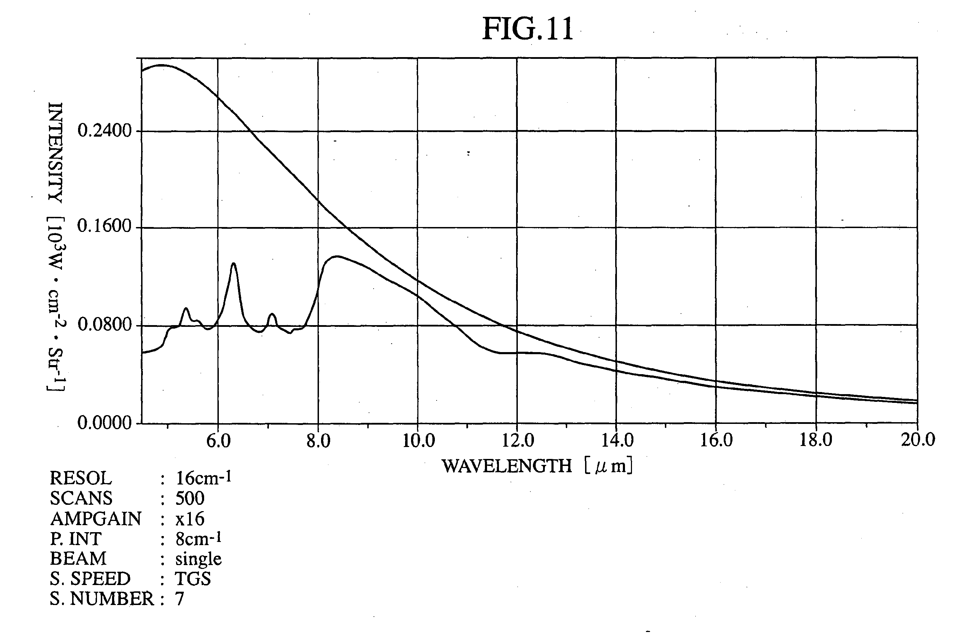

In Fig. 8 and Fig. 10, the temperature of the aluminum plate was measured by use of a two-point temperature standard calibration method while controlling a standard blackbody furnace at 80°C and 160°C. In Fig. 9 and Fig. 11, the temperature of the aluminum plate was measured by use of a one-point temperature standard calibration method while controlling the standard blackbody furnace at 300°C.

MCT and TGS detectors having a measurement wavelength range from 4.5 to 20 µm were used, having a resolution was 16 cm⁻¹ and accumulation frequency was 500 times. As shown in Fig. 8 and Fig. 9, sharp fluctuations of the transmittance were observed in the wavelength range from 4.5 to 12 µm. Moreover, in the wavelength range from 4.5 to 8 µm, the transmittance at 300°C is lower than the transmittance measured at 50°C.

Furthermore, the transmittance reaches about 85% in the wavelength range from 12 to 20 µm. Accordingly, it is confirmed that heat rays (far infrared rays) are emitted from the metal coating material according to the first embodiment. In addition, in Fig. 10 and Fig. 11, intensity in terms of the wavelength of the metal coating material according to the first embodiment becomes close to the intensity behavior of a blackbody, which is indicated by smooth curves in Fig. 10 and Fig. 11. Therefore, it is apparent that the far infrared rays are emitted from the metal coating material according to the first embodiment both at 50°C and 300°C.

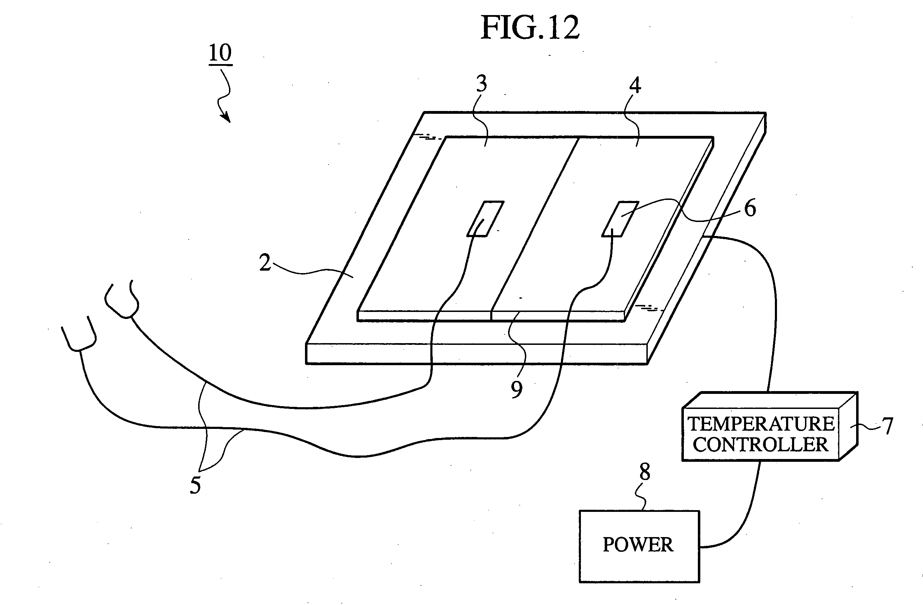

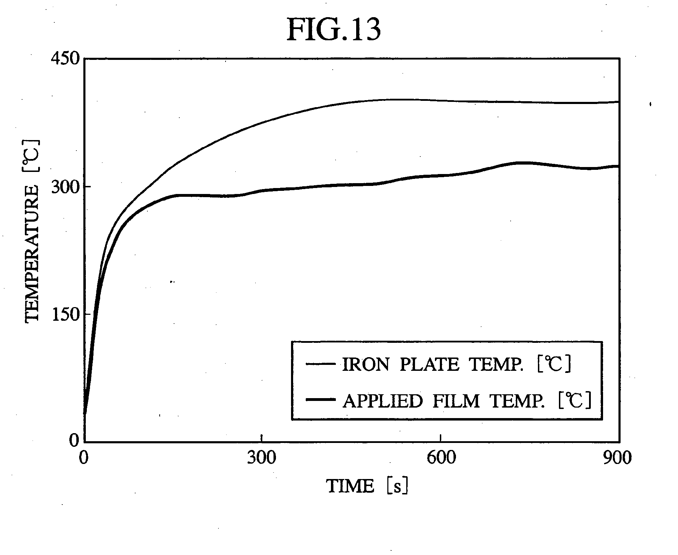

Fig. 13 shows temperature variation of the applied film using the metal coating material according to the first embodiment with temperature measurement apparatus 10 shown in Fig. 12. An iron plate 9 having a thickness of 2 mm and a dimension of 100 mm × 100 mm was disposed on a quadrangle heater 2 having a dimension of 150 mm × 450 mm. The heater 2 was connected to a temperature controller 7 and a power source 8 which is connected to the temperature controller 7.

A slide voltage regulator and a thyristor were used as the temperature controller 7 for adjusting the temperature. A coating material applied surface 3 was provided on part of a surface of the iron plate 9, and a coating material subject to measurement was applied thereon. The coating material was applied on the iron plate 9 in a film thickness of 100 µm.

The remaining part of the surface of the iron plate 9 was used as an iron plate surface 4 in order to measure a surface temperature of the iron plate 9. Thermocouples 5, each having diameters of 0.2 mm, were disposed on the coating material applied surface 3 and the iron plate surface 4, and fixed thereto with aluminum tape 6. C060-K thermocouples or C060-T thermocouples were used as the thermocouples 5.

Ends of the thermocouples 5 were connected to an unillustrated temperature recorder. As shown in Fig. 13, it is apparent that the surface 10 with application of the metal coating material according to the first embodiment shows that the temperature was lower by about 30°C than the surface temperature of the iron plate surface 9, and that the applied surface 10 exhibited an excellent heat radiation characteristic.

As apparent from Fig. 13, the applied film the metal coating material effectively radiates the applied heat as heat rays (far infrared rays). For this reason, the applied film of the metal coating material according to the first embodiment can maintain the heat radiation characteristic effectively in a temperature range of from 300°C to 1000°C and above, maybe in a range of from 300°C to 3000°C, and transfers thermal energy effectively from the surface of the metal as a coated material.

Accordingly, it is possible to prevent overheating of a member exposed to a high temperature. For example, by applying the metal coating material shown in Fig. 1 on a surface of a steel frame member, it may be possible to provide an iron or a steel frame whose surface is cooled down to a temperature range from 500°C to 700°C even under an environment in a range of from 500°C to 1200°C for preventing the steel frame from deformation.

Moreover, by applying the metal coating material according to the first embodiment of the present invention on a metallic portion of a jet engine exhaust tube, an inner wall of an incinerator or the like, which is exposed to a high temperature, it is possible to promote heat radiation effects, to suppress heating of the metallic portion, and to prevent such a device from corrosion and deterioration. In addition, by applying the metal coating material according to the first embodiment to an outer wall of a space shuttle instead of heat-resistant tiles attached thereto, it may be possible to form an applied film which promotes heat radiation effects and covers the space shuttle without gaps.

Furthermore, since the far infrared rays are emitted from the applied film using the metal coating material according to the first embodiment, it is possible to form an applied film having an antibacterial property, a fungicide property, and deodorizing property. Since the metal coating material according to the first embodiment is composed of inorganic materials, the metal coating material is excellent in acid resistance and alkali resistance, and does not generate volatile, poisonous gas composed to an organic solvent.

Moreover, since the metal coating material according to the first embodiment has excellent adhesion to metal in a high temperature environment in the range of from 300°C to 1000°C, maybe in the range of from 300°C to 3000°C, a film of the metal coating material does not easily detachment from the coated material.

### <Method of manufacturing the metal coating material>

Next, a method of manufacturing the metal coating material according to the first embodiment of the present invention will be described. Here, the method of manufacturing the metal coating material described below is only an example, and it is needless to say that various manufacturing methods are possible including modified examples thereof.

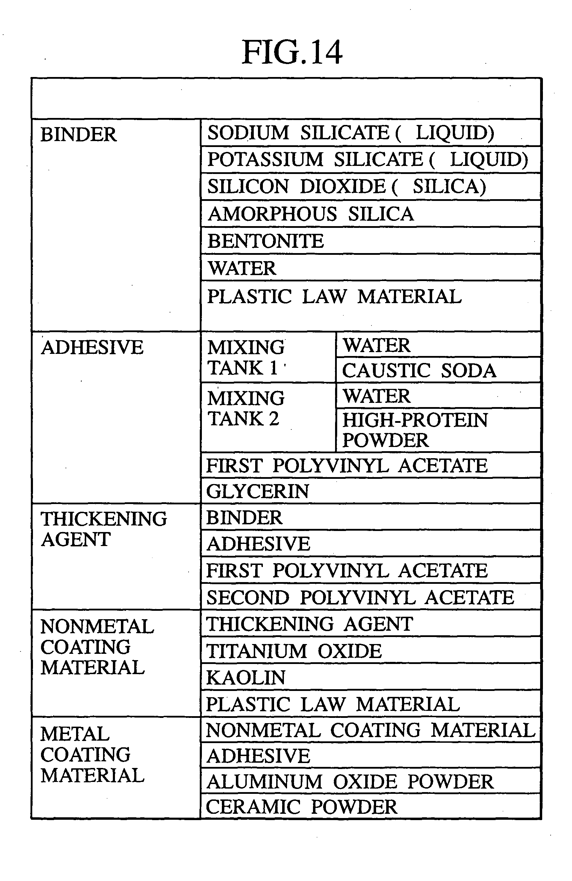

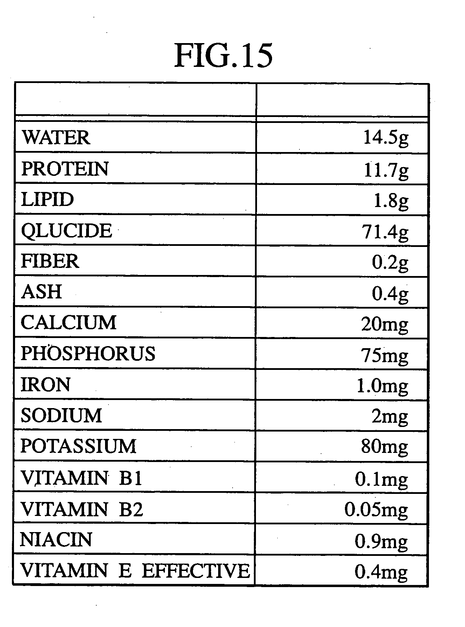

As exemplified in Fig. 14, the metal coating material according to the first embodiment is made of: a nonmetal coating material including a thickening agent made from a binder; an adhesive; aluminum oxide powder; and ceramic powder. The binder will be described later in a third embodiment. The nonmetal coating material will be described later in a second embodiment. The adhesive is made of water, caustic soda, high-protein powder, polyvinyl acetate, and glycerin.
a) Firstly, the thickening agent, titanium oxide, kaolin, and a plastic raw material are mixed and the nonmetal coating material is thereby prepared. Then, 30 to 40 kg of the nonmetal coating material is put in a mixing tank or other appropriate vessel and the mixture is agitated. Thereafter, 7 to 15 kg of the aluminum oxide powder is put in the mixing tank and the mixture is agitated for 15 to 30 minutes.
b) Next, 10 to 15 kg of the adhesive manufactured by mixing water, caustic soda, high protein powder, polyvinyl acetate, and glycerin is prepared. Here, the "high-protein powder" included in the adhesive is preferred to be powder having contents per 100 g as shown in Fig. 15, namely, about 11.7 g of protein, 1.8 g of lipid, 71.4 g of glucide, 0.2 g of fiber, and 0.4 g of ash. As the high-protein powder, a grain which contains minute amounts of inorganic materials such as calcium, phosphorus, iron, sodium, and potassium can be used. The manufactured adhesive is put in the mixing tank and the mixture is further agitated for 15 to 20 minutes.
c) Subsequently, 10 to 20 kg of the ceramic powder is put in the mixing tank, and the mixture is agitated for 10 to 20 minutes. Silica sand, alumina, titanium oxide and the like can be used as the ceramic powder. After agitation, the mixture powder included in a fluid is ground into fine particles having grain sizes in a range of from 0.15 to 200 µm as shown in Fig. 5, for example.

According to the method of manufacturing the metal coating material of the first embodiment of the present invention, a high-temperature and high-pressure condition is not required, at all unlike refinement of firebricks. Therefore, it is possible to manufacture the coating material according to the first embodiment easily at a room temperature without requiring expert or complicated techniques.

Moreover, respective raw materials of the metal coating material according to the first embodiment are inexpensive and easy to prepare. Therefore, it is possible to reduce manufacturing costs. The metal coating material according to the first embodiment is composed of inorganic materials and is water-soluble. Upon application, the metal coating material can be diluted easily with water. In this way, it is possible to apply the coating material uniformly without causing undulations on the coated material.

Furthermore, it is only necessary to wear rubber gloves when applying the metal coating material according to the first embodiment. A user does not have to wear protective clothing to protect against odor or powerful side affects unlike an operation of applying an organic coating material.

### (Second Embodiment)

A nonmetal coating material of a second embodiment includes, as a result of a fluorescent X-ray analysis in an incinerated state after drying the material at 105°C for 5 hours and heating at an ignition temperature of 700°C, Na in a range of from 0.1% to 10%, Mg in a range of from 0.01% to 1%, Al in a range of from 1% to 20%, Si in a range of from 10% to 30%, P in a range of from 0.01% to 0.5%, sulfur (S) in a range of from 0.01% to 1%, Cl in a range of from 0.01% to 1%, K in a range of from 0.1% to 10%, Ca in a range of from 0.01% to 0.1%, Ti in a range of from 0.1% to 10%, chromium (Cr) in a range of from 0.01% to 2%, manganese (Mn) in a range of from 0.01% to 2%, Fe in a range of from 0.01% to 2%, cobalt (Co) in a range of from 0.01% to 2%, and nickel (Ni) in a range of from 0.01% to 2%.

The nonmetal coating material further includes rubidium (Rb) in a range of from 0.001% to 0.05%, Sr in a range of from 0.001% to 0.05%, Zr in a range of from 0.001% to 0.05%, and Nb in a range of from 0.001% to 1%.

Here, Na is included preferably in a range of from 0.5% to 2.0%, and more preferably in a range of from 0.7% to 1.5%. Mg is included preferably in a range of from 0.01% to 0.08%, and more preferably in a range of from 0.015% to 0.040%. Al is included preferably in a range of from 1% to 15%, and more preferably in a range of from 5% to 13%.

Si is included preferably in a range of from 15% to 30%, and more preferably in a range of from 18% to 22%. P is included preferably in a range of from 0.01% to 0.1%, and more preferably in a range of from 0.02% to 0.05%. S is included preferably in a range of from 0.01% to 0.5%, and more preferably in a range of from 0.05% to 0.2%. Cl is included preferably in a range of from 0.05% to 0.50%, , and more preferably in a range of from 0.08% to 0.2%.

K is included preferably in a range of from 0.5% to 8.0%, and more preferably in a range of from 1.0% to 5.0%. Ca is included preferably in a range of from 0.01% to 0.08%, and more preferably in a range of from 0.03% to 0.06%. Ti is included preferably in a range of from 0.5% to 8%, and more preferably in a range of from 2.0% to 8.0%.

Cr is included preferably in a range of from 0.05% to 1.5%, and more preferably in a range of from 0.1% to 0.8%. Mn is included preferably in a range of from 0.05% to 1.5%, and more preferably in a range of from 0.1% to 0.8%. Fe is included preferably in a range of from 0.05% to 1.5%, and more preferably in a range of from 0.1% to 0.9%. Co is included preferably in a range of from 0.05% to 1.5%, and more preferably in a range of from 0.1% to 0.5%.

Ni is included preferably in a range of from 0.05% to 1.5%, and more preferably in a range of from 0.1% to 0.5%. Rb is included preferably in a range of from 0.05% to 1.5%, and more preferably in a range of from 0.1% to 0.5%. Sr is included preferably in a range of from 0.001% to 0.03%, and more preferably in a range of from 0.005% to 0.02%. Zr is included preferably in a range of from 0.001% to 0.03%, and more preferably in a range of from 0.005% to 0.02%. Nb is included preferably in a range of from 0.005% to 0.1%, and more preferably in a range of from 0.01% to 0.05%.

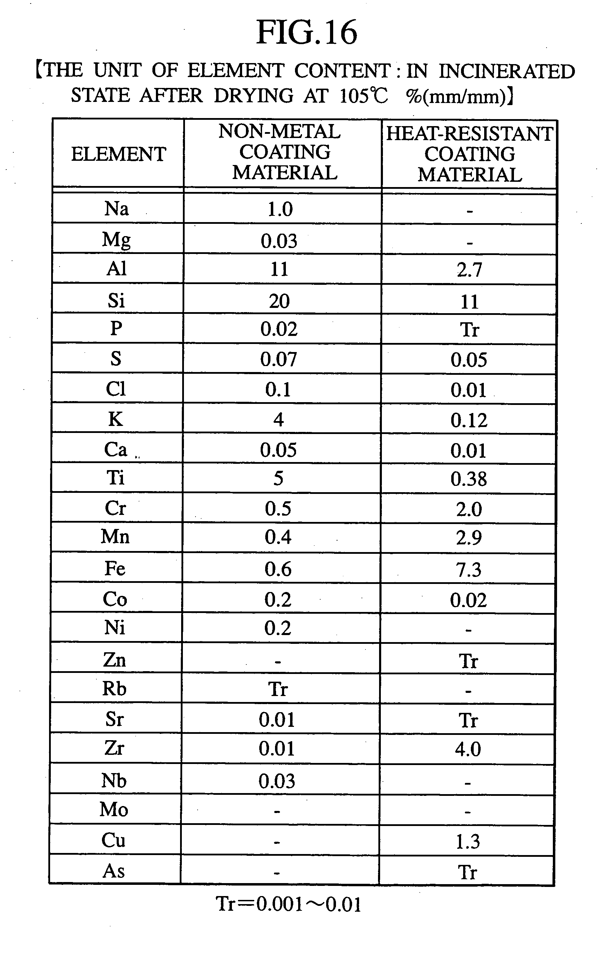

The forgoing numerical values (mass% (mm/mm)) can be obtained by a qualitative analysis for elements having an atomic numbers equal to or greater than 6 (carbon) using the fundamental parameter (FP) method. Fig. 16 exemplifies typical numerical values of the nonmetal coating material according to the second embodiment. In Fig. 16, calculation is made on the assumption that a content of hydrogen is 0 mass%, and analytical values for carbon and oxygen are not indicated.

From the numerical values exemplified in Fig. 16, it is preferable that, in relation to silicon (Si), the nonmetal coating material according to the second embodiment includes Na in a range of from 4% to 8%, Mg in a range of from 0.1% to 0.5%, Cl in a range of from 0.3% to 0.6%, and K in a range of from 0.1% to 0.5%. It is more preferable that, in relation to Si, the nonmetal coating material according to the second embodiment includes Na in a range of from 4.5% to 6%, Mg in a range of from 0.1% to 0.3%, Cl in a range of from 0.4% to 0.6%, and K in a range of from 0.1% to 0.3%.

As a comparative example, an analysis result of a heat-resistant coating material is also shown in Fig. 16. Na and Mg included in the nonmetal coating material according to the second embodiment are not included in the heat-resistant coating material. Moreover, 4% of K is , included in the nonmetal coating material according to the second embodiment, which is a larger proportion as compared to the heat-resistant coating material that includes 0.12% of K.

In addition, while 4.0% of Zr is included in the heat-resistant coating material, Zr is included only in a small amount of about 0.01% in the nonmetal coating material according to the second embodiment. Moreover, while Cu and As are included in the heat-resistant coating material, Cu or As is not included in the nonmetal coating material according to the second embodiment.

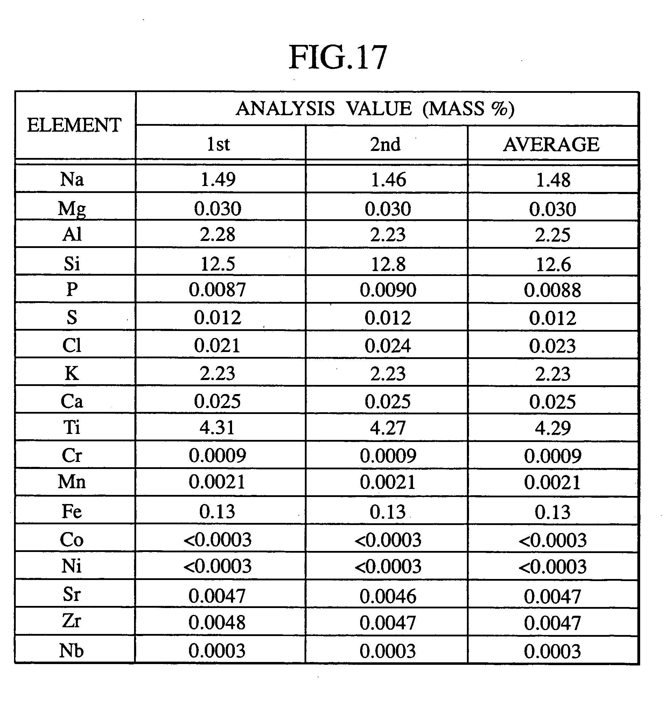

In addition, Fig.17 shows an example of the quantitative analysis result of the nonmetal coating material according to the second embodiment. The result as shown in Fig. 17 is measured by the ICP optical emission spectrometer (SPS4000, made by SII Nanotechnology Inc. ) , the polarized zeeman atomic absorption spectrophotometer (180-80, made by Hitachi Ltd.), and the X-ray fluorescence spectrometer (RIX-3000, made by Rigaku Corporation.).

The amount of Si is measured by the ICP optical emission spectroscopy. The sample for analyzing Si is obtained as follows; mixing the nonmetal coating material, weighing out the nonmetal coating material to the Pt melting pot, adding sulfuric acid and heating the nonmetal coating material to carbonize and incinerate the material, dissolving the incinerated resultant in a sodium carbonate and dissolving the resultant in water, adding nitric acid and hydrochloric acid to make the resultant an acidulous salt, and taking the resultant at a fixed quantity. The resultant solution is diluted with nitric acid before analysis.

The amount of K and Ca are measured by the polarized zeeman atomic absorption spectrophotometer. The samples of K and Ca are obtained as follows; mixing the nonmetal coating material, weighing out the nonmetal coating material to the vessel, adding nitric acid, sulfuric acid, and hydrofluoric acid and heating to decompose compositions of the coating material, and dissolving the resultant in the nitric acid and making the resultant at a constant volume. The resultant solution is diluted with nitric acid before analysis.

The amount of Mg, Al, P, Ca, Ti, Cr, Mn, Fe, Co, Ni, Se, Zr, and Nb is measured by ICP optical emission spectroscopy. The samples of these elements are obtained as follows; mixing the nonmetal coating material and weighing out the nonmetal coating material to an appropriate vessel, adding nitric acid, sulfuric acid, and hydrofluoric acid and heating to decompose compositions of the coating material, dissolving the resultant in the nitric acid and taking the resultant at a fixed quantity. The resultant is diluted with nitric acid before analyzing.

Cl and S are weighed and sampled in a measurement cell and measured by the X-ray fluorescence spectrometer in a helium (He) atmosphere. The samples of Cl and S are obtained as follows; mixing the nonmetal coating material and weighing the nonmetal coating material on an aluminum plate having dimensions of 30mm square, and drying the nonmetal coating material with an infrared lamp.

As a result of quantitative analysis using the above-described apparatus, the nonmetal coating material according to the second embodiment of the present invention includes Na in a range of from 1.0% to 1.7%, Mg in a range of from 0.01% to 0.05%, Al in a range of from 2.0% to 2.5%, Si in a range of from 12% to 14%, P in a range of from 0.0080% to 0.0095%, Cl in a range of from 0.020% to 0.026%, K in a range of from 2.1% to 2.5%, Ca in a range of from 0.020% to 0.030%, Ti in a range of from 4.0% to 4.5%, and Zr in a range of from 0.00045% to 0.005%.

The nonmetal coating material further includes S in a range of from 0.010% to 0.015%, Cr in a range of from 0.0007% to 0.0010%, Mn in a range of from 0.0015% to 0.003%, Fe in a range of from 0.10% to 0.20%, Co in a range of from 0.0001% to 0.0003%, Ni in a range of from 0.0001% to 0.0003%, Sr in a range of from 0.0040% to 0.0050%, and Nb in a range of from 0.0001% to 0.0004%.

Here, Na is included preferably in a range of from 1.45% to 1.49%. Mg is included preferably in a range of from 0.025% to 0.035%, Al is included preferably in a range of from 2.1% to 2.4%, Si is included preferably in a range of from 12.2% to 12.8%. P is included preferably in a range of from 0.0085% to 0.0092%. S is preferably in a range of from 0.011% to 0.013%. Cl is included preferably in a range of from 0.021% to 0.25%.

K is included preferably in a range of from 2.20% to 2.25%. Ca is included preferably in a range of from 0.0023% to 0.0026%. Ti is included preferably in a range of from 4.25% to 4.35%. Cr is preferably in a range of from 0.0008% to 0.00095%. Mn is preferably in a range of from 0.0018% to 0.0023%. Fe is included preferably in a range of from 0.125% to 0.135%. Sr is more preferably in a range of from 0.0045% to 0.0048%. Nb is included preferably in a range of from 0.0002% to 0.0003.

An applied film using the nonmetal coating material according to the second embodiment of the present invention radiates applied heat as heat rays (far infrared rays). The infrared rays are emitted from a building component such as wood or aggregate, to which the nonmetal coating material according to the second embodiment has been applied. Therefore, no mold or vermin, such as termites may be attracted to a surface of the building component as a coated material. Moreover, the applied film using the nonmetal coating material according to the second embodiment provides a heat radiation characteristic effective in a high temperature range from 300°C to 1000°C , and above, and transfers thermal energy effectively from the surface of the coated material.

Accordingly, the nonmetal coating material according to the second embodiment can be adopted for devices, building components, and the like which require heat-resistant structures. For example, by forming an applied film using the nonmetal coating material according to the second embodiment on a surface of concrete, it is possible to provide a concrete member which promotes heat radiation effects and has excellent heat resistance properties.

Moreover, since the nonmetal coating material according to the second embodiment has excellent adhesion to nonmetallic substances such as wood or aggregate, the film of the nonmetal coating material does not easily detachment from the coated material, does not damage nonmetal substances, and the like.

### <Method of manufacturing the nonmetal coating material>

Next, a method of manufacturing the nonmetal coating material according to the second embodiment of the present invention will be described. Here, the method of manufacturing the nonmetal coating material described below is only an example, and it is needless to say that various manufacturing methods are possible including modified examples thereof.

As exemplified in Fig. 14, the nonmetal coating material according to the second embodiment is made of a thickening agent including a binder and an adhesive as raw materials; titanium oxide; kaolin; and a plastic raw material. Here, the "plastic raw material" refers to clay powder including carbonized charcoal, and a major constituent mineral thereof is kaolinite. Kaolinite is normally composed of fine granules having diameters of 1 µm and below and shaped as hexagonal plates. In addition to kaolinite, the plastic raw material further includes halloysite, quartz, montmorillonite, and illite. The above-described plastic raw material has a high shrinkage ratio, dry strength, and viscosity.

Firstly, 20 to 25 kg of the thickening agent, and 2 to 5 kg of the titanium oxide powder are put in a mixing tank or other appropriate vessel and the mixture is agitated for 5 to 10 minutes. Then, 3 to 7 kg of the kaolin powder is put therein in several divided amounts and the mixture is agitated for 15 to 20 minutes. Then, 2 to 5 kg of the plastic raw material is put in the mixing tank in two or three divided amounts and the mixture is agitated for 15 to 20 minutes. After agitation, the mixture in the mixing tank is ground. The ground powder preferably includes fine particles having grain sizes in a range of from 0.15 to 200 µm as shown in Fig. 5. The nonmetal coating material is produced by the above-described processes. ,

According to the method of manufacturing the nonmetal coating material of the second embodiment of the present invention, a high-temperature and high-pressure condition is not required at all, unlike refinement of firebricks. Therefore, it is possible to manufacture the coating material according to the second embodiment easily at a room temperature without requiring expert or complicated techniques.

Moreover, respective raw materials for the nonmetal coating material according to the second embodiment are inexpensive and easy to prepare. Therefore, it is possible to reduce manufacturing costs. The manufactured nonmetal coating material is composed of inorganic materials and is water-soluble.

Upon application, the nonmetal coating material according to the second embodiment can be diluted easily with tap water. In this way, it is possible to apply the coating material uniformly without causing undulations on the coated material. It is only necessary to wear rubber gloves when applying the nonmetal coating material according to the second embodiment. A user does not have to wear protective clothing against odor or powerful side affects unlike an operation of applying an organic coating material.

### (Third Embodiment)

A binder according to a third embodiment of the present invention of the present invention was analyzed as a result of a fluorescent X-ray analysis of the binder in an incinerated state after drying at 105°C for 5 hours and heating at an ignition temperature of 700°C. The binder includes Na in a range of from 0.1% to 10%, Mg in a range of from 0.01% to 1%, Al in a range of from 0.1% to 10%, Si in a range of from 10% to 35%, K in a range of from 1% to 20%, Ca in a range of from 0.01% to 5%, Ti in a range of from 0.01% to 5%, and Fe in a range of from 0.1% to 3%.

The binder according to the third embodiment further includes P in a range of from 0.001% to 1%, S in a range of from 0.01% to 1%, Cl in a range of from 0.01% to 1%, Mn in a range of from 0.001% to 1%, Zn in a range of from 0.001% to 1%, Rb in a range of from 0.001% to 1%, Sr in a range of from 0.001% to 1%, and Zr in a range of from 0.001% to 1%.

Here, Na is included preferably in a range of from 0.5% to 5.0%, and more preferably in a range of from 1% to 3%. Mg is included preferably in a range of from 0.01% to 0.8%, and more preferably in a range of from 0.05% to 0.2%. Al is included preferably in a range of from 0.5% to 8%, and more preferably in a range of from 0.8% to 4%. Si is included preferably in a range of from 15% to 33%, and more preferably in a range of from 25% to 30%. ,

P is included preferably in a range of from 0.005% to 0.05%, and more preferably in a range of from 0.006% to 0.02%. S is included preferably in a range of from 0.01% to 0.5%, and more preferably in a range of from 0.05% to 0.15%. Cl is included preferably in a range of from 0.05% to 0.50%, and more preferably in a range of from 0.08% to 0.2%. K is included preferably in a range of from 5% to 18%, and more preferably in a range of from 8% to 15%.

Ca is included preferably in a range of from 0.01% to 1%, and more preferably in a range of from 0.05% to 0.2%. Ti is included preferably in a range of from 0.01% to 1%, and more preferably in a range of from 0.05% to 0.2%. Mn is included preferably in a range of from 0.01% to 0.5%, and more preferably in a range of from 0.01% to 0.08%. Fe is included preferably in a range of from 0.05% to 1.5%, and more preferably in a range of from 0.3% to 0.9%.

Zn is included preferably in a range of from 0.001% to 0.03%, and more preferably in a range of from 0.005% to 0.015%. Rb is included preferably in a range of from 0.001% to 0.03%, and more preferably in a range of from 0.005% to 0.015%. Sr is included preferably in a range of from 0.001% to 0.03%, and more preferably in a range of from 0.005% to 0.015%. Zr is included preferably in a range of from 0.001% to 0.03%, and more preferably in a range of from 0.005% to 0.02%.

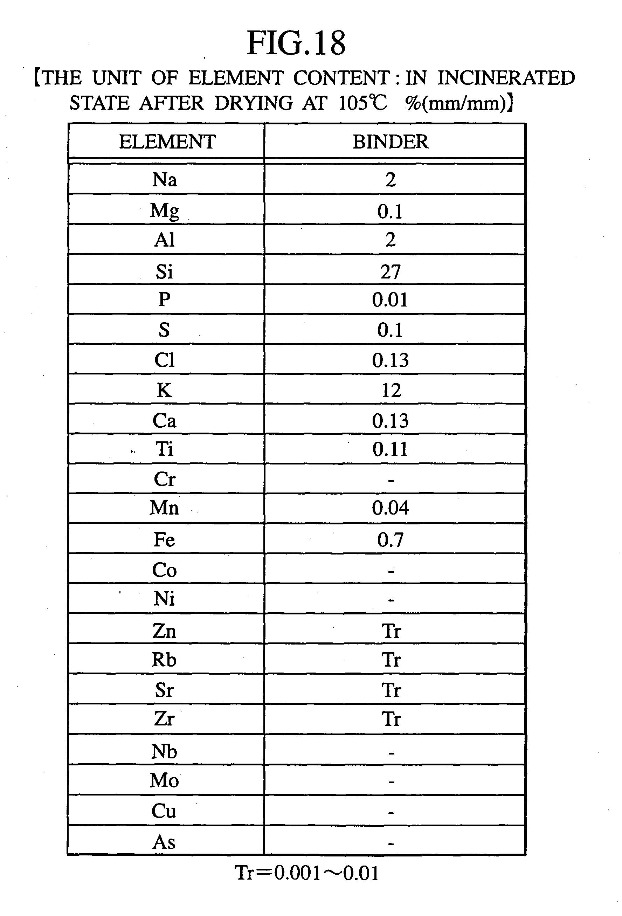

Fig. 18 exemplifies typical numerical values (mass%(mm/mm)) of the binder according to the third embodiment. In Fig. 18, calculation is made on the assumption that a content of hydrogen is 0 mass%, and analytical values for carbon and oxygen are not indicated. From the numerical values exemplified in Fig. 16, it is preferable that, in relation to Si, the binder according to the third embodiment includes Na in a range of from 4% to 8%, Mg in a range of from 0.1% to 0.5%, Cl in a range of from 0.3% to 0.6%, and K in a range of from 0.1% to 0.5%.

It is more preferable that, in relation to silicon (Si) , the binder according to the third embodiment includes Na in a range of from 5% to 7.8%, Mg in a range of from 0.3% to 0.45%, Cl in a range of from 0.4% to 0.6%, and K in a range of from 0.3% to 0.45%.

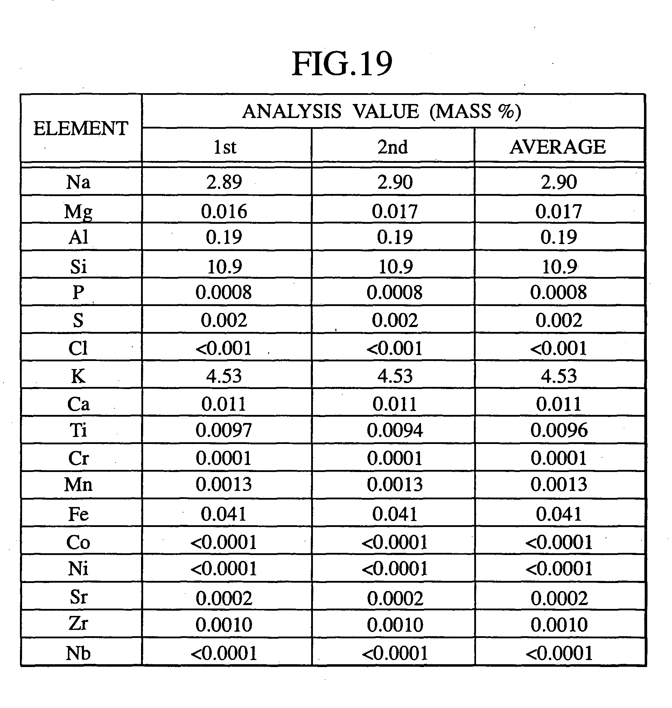

In addition, Fig.19 shows an example of a quantitative analysis result of the binder according to the third embodiment. The result as shown in Fig.19 is measured by the ICP optical emission spectrometer (SPS4000, made by SII Nanotechnology Inc.), the polarized zeeman atomic absorption spectrophotometer (180-80, made by Hitachi Ltd.), and the X-ray fluorescence spectrometer (RIX-3000, made by Rigaku Corporation.).

The amount of Si is measured by the ICP optical emission spectroscopy. The sample of Si is obtained as follows; mixing the binder, weighing out the binder to the Pt melting pot, adding sulfuric acid and heating to , carbonize and incinerate the binder, dissolving the incinerated resultant in a sodium carbonate and dissolving the resultant in water, adding nitric acid and hydrochloric acid to make the resultant an acidulous salt, and taking the resultant as a fixed quantity. The resultant solution is diluted with nitric acid before analysis.

The amount of K and Ca are measured by the polarized zeeman atomic absorption spectrophotometer. The samples of K and Ca are obtained as follows; mixing the binder, weighing out the binder to the beaker, adding nitric acid, sulfuric acid, and hydrofluoric acid and heating to decompose compositions of the binder, and dissolving the resultant in the nitric acid and taking the resultant at a fixed quantitive. The resultant solution is diluted with nitric acid before analysis.

The amount of Mg, Al, P, Ca, Ti, Cr, Mn, Fe, Co, Ni, Se, Zr, and Nb is measured by ICP optical emission spectroscopy. The samples of these elements are obtained as follows; mixing the metal coating material and weighing out the binder to a beaker of other vessel, adding nitric acid, sulfuric acid, and hydrofluoric acid and heating to decompose compositions of the coating material, dissolving the resultant in the nitric acid and taking the resultant at a fixed quantity. The resultant is diluted with nitric acid before analysis.

Cl and S are weighed and sampled in a measurement cell and measured by the X-ray fluorescence spectrometer with helium (He) atmosphere. The samples of Cl and S are obtained as follows; mixing the binder and weighing the binder on the aluminum plate having dimensions of 30mm square, and drying the binder with an infrared lamp.

As a result of quantitative analysis using above-described apparatus, the binder according to the third embodiment of the present invention includes Na in a range of from 2.5% to 3.3%, Mg in a range of from 0.010% to 0.030%, Al in a range of from 0.1% to 0.3%, Si in a range of from 8.0% to 15%, P in a range of from 0.0005% to 0.002%, Cl in a range of from 0.000005% to 0.00001%, K in a range of from 4.0% to 6.0%, Ca in a range of from 0.020% to 0.030%, Ti in a range of from 0.005% to 0.015%, and Zr in a range of from 0.00060% to 0.0020%.

The metal coating material further includes S in a range of from 0.0010% to 0.003%, Cr in a range of from 0.00007% to 0.0001%, Mn in a range of from 0.0005% to 0.002%, Fe in a range of from 0.02% to 0.06%, and Sr in a range of from 0.0001% to 0.0003%.

Here, Na is included preferably in a range of from 2.70% to 3.30%. Mg is included preferably in a range of from 0.0013% to 0.020%, Al is included preferably in a range of from 0.015% to 0.22%, Si is included preferably in a range of from 8.0% to 11.0%. P is included preferably in a range of from 0.0006% to 0.0009%. K is included preferably in a range of from 4.0% to 5.0%. Ti is included preferably in a range of from 0.007% to 0.010%. Zn is included preferably in a range of from 0.007% to 0.015.

According to the third embodiment of the present invention, it is possible to manufacture a heat-radiative coating material shown in the first and second embodiments by using the binder. It may be also possible to manufacture a heat-radiative building component, a heat-radiative aggregate, a heat-radiative adhesive, and the like by blending at least one of paper, chaff, sawdust, bagasse, tea dregs, buckwheat chaff, wood chips, wood waste, bamboo charcoal waste, and perlite with the binder according to the third embodiment.

The manufactured heat-radiative building component, heat-radiative aggregate, and heat-radiative adhesive maintain heat radiation characteristics effectively at a high temperature condition in a range of from 300°C to 1000°C and above, maybe in a range of from 300°C to 3000°C transfer thermal energy effectively from a surface of a coated material. Accordingly, the heat-radiative building component, heat-radiative aggregate and heat-radiative adhesive can be applied to a material which requires a heat resistance and corrosion resistance.

### <First example of the binder>

In addition to the coating materials described in the first and second embodiments, the binder according to the third embodiment of the present invention may be blended with waste paper to manufacture a heat-radiative waste paper board. The waste paper board is cut into small pieces each having dimensions of about 1 to 10 mm square. The shape of the waste paper may be irregular. Paper from telephone directories or encyclopedias may be used as the waste paper. Then, 300 to 700 g of the waster paper and 0.5 to 2 kg of the binder are put in a mixing tank and the mixture is agitated.

Subsequently, 300 to 700 g of perlite having diameters of 1 to 5 mm are put in the mixing tank or vessel, and the mixture is agitated. The substance, formed into gel by agitation, is poured into a molding box having dimensions of 30 to 100 cm square and a depths of about 1 to 15 cm.

Thereafter, pressure is applied to the gel substance poured into the molding box to evaporate moisture. The gel substance is subjected to air drying for 1 to 10 days and then to forced drying with heat in a range of from 80°C to 200°C.

### <Second example of the binder>

The binder according to the third embodiment of the present invention may be blended with charcoal to manufacture a heat-radiative charcoal board. To manufacture the heat-radiative charcoal board, the charcoal is firstly formed into grain sizes in a range of from 0.05 to 1 cm. Then, 1 to 1.5 kg of the charcoal after grain size adjustment and 2 to 3 kg of the binder are put in a mixing tank or appropriate vessel and the mixture is agitated with, for example, a propeller type mechanical agitator. Sawdust may be blended instead of the charcoal.

After visually checking a uniform mixture of the heat-radiative binder and the charcoal, 100 to 300 g of perlite and 500 to 800 g of kaolin are mixed therein. It is possible to mix perlite and kaolin in advance. Then, the mixture is further agitated with the agitator. When the fluid in the mixing tank turns into a gel, the gel substance is poured into a molding box. The molding box can be formed into any shape.

Thereafter, pressure is applied to the gel substance poured into the molding box to evaporate moisture. For example, the gel substance is subjected to air drying for 1 to 10 days and then to forced drying with heat in a range of from 80°C to 200°C, whereby the water content of the substance is reduced to about 0.01% to 5%.

The heat-radiative waste paper board and the heat-radiative charcoal board can be produced by the above-described processes. The heat-radiative waste paper board and the heat-radiative charcoal board using the binder according to the third embodiment of the present invention function to effectively radiate the applied heat as heat rays (far infrared rays).

The heat-radiative waste paper board and the heat-radiative charcoal board, using the binder according to the third embodiment, may maintain the heat radiation characteristic effectively even in a temperature range of from 300°C to 1000°C, maybe in a range of from 300°C to 3000°C and transfer thermal energy effectively from surfaces of the boards.

Accordingly, even if one of the surfaces of the heat-radiative waste paper board or the heat-radiative charcoal board using the binder according to the third embodiment is exposed to a high temperature of about 1200°C, for example, it is possible to touch by hand the other surface not exposed to the high temperature. Moreover, the infrared rays are emitted from the heat-radiative waste paper board and the heat-radiative charcoal board using the binder according to the third embodiment. Therefore, it may be possible to prevent growth of molds or infestation by vermin such as termites.

### <Incombustible characteristic of the heat-radiative board manufactured by use of the binder>

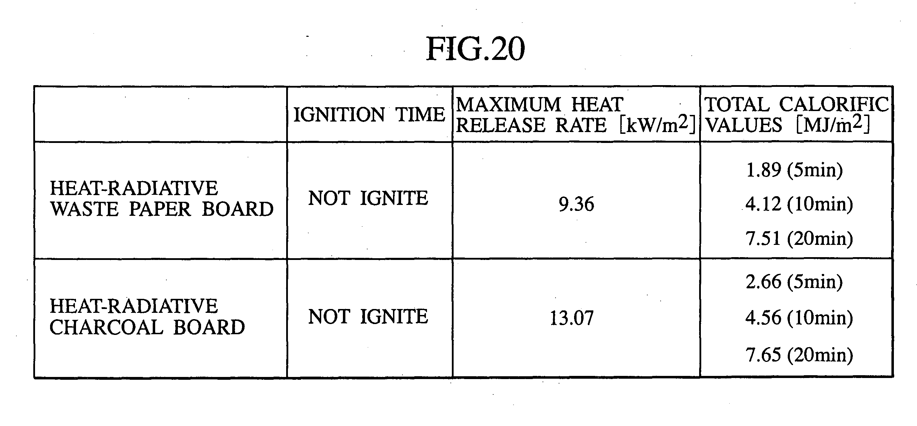

Fig. 20 shows results of cone calorie tests on the heat-radiative waste paper board and the heat-radiative charcoal board using the binder according to the third embodiment with a cone calorimeter (CONE2, made by Atlas Electric Devices Company). In the cone calorie tests, maximum heat release rates [kW/m²] and total calorific values [MJ/m²] of the heat-radiative waste paper board and the heat-radiative charcoal board were measured in accordance with International Organization for Standardization (ISO) 5660. After starting the test, a phenomenon called "flash" was observed in the heat-radiative waste paper board, in which the waste paper included in the boards occasionally caught on fire and the flame disappeared in substantially no time.

However, the board itself was not ignited or burned. Moreover, the maximum heat release rate of the heat-radiative waste paper board was 9.36 kW/m² and the total calorific value for 20 minutes was 7.51 MJ/m². Accordingly, the heat-radiative waste paper board complied with requirements for an "incombustible material" defined in the heat generation test according to ISO 5660.

Regarding the heat-radiative charcoal board, no flash or ignition phenomenon and burning of the board itself was observed. The maximum heat release rate of the heat-radiative charcoal board was 13.07 kW/m² and the total calorific value for 20 minutes was 7.65 MJ/m². Accordingly, the heat-radiative charcoal board complied with the requirements for an "incombustible material" defined in the heat generation test according to ISO 5660.

### <Method of manufacturing the binder>

Next, a method of manufacturing the binder according to the third embodiment of the present invention will be described. Here, the method of manufacturing the binder described below is only an example, and it is needless to say that various manufacturing methods are possible including modified examples thereof.

As exemplified in Fig. 14, the binder according to the third embodiment is made of sodium silicate, potassium silicate, silicon dioxide (silica), amorphous silica, bentonite, and a plastic raw material. Here, similar to the raw material of the nonmetal coating material according to the second embodiment, the "plastic raw material" is clay powder including carbonized charcoal, and a major constituent mineral thereof is kaolinite.

Firstly, 10 to 30 kg of a sodium silicate liquid and 10 to 20 kg of a potassium silicate liquid are put in a mixing tank or other appropriate vessel and the mixture is agitated for 15 minutes. Thereafter, 1 to 10 kg of a silicon dioxide liquid is added and the mixture is further agitated for 5 to 10 minutes. Then, 30 to 50 kg of water is put in another mixing tank or other appropriate vessel and 100 to 500 g of bentonite powder is dissolved therein. The liquid in the first mixing tank is mixed with the liquid in the second tank and the mixture is agitated for 5 to , 10 minutes.

Thereafter, 1 to 3 kg of amorphous silica powder is added and the mixture is further agitated for 15 to 30 minutes. Then, 0.2 to 5 kg of the plastic raw material is mixed with the liquid in the second mixing tank after addition of the amorphous silica powder, and the mixture is agitated for 20 to 40 minutes.

The method of manufacturing the binder of the third embodiment does not require a high-temperature and high-pressure condition. Therefore, it is possible to manufacture the binder easily at a room temperature without requiring expert or complex techniques. Moreover, respective raw materials of the binder according to the third embodiment are inexpensive and easy to prepare. Therefore, it is possible to reduce manufacturing costs.

The binder according to the third embodiment is composed of inorganic materials and is water-soluble. Therefore, the binder can be diluted easily with tap water. As a result, the binder is applicable for the coating materials described in the first and second embodiments, heat-insulating materials, adhesives, and the like.

### (Fourth Embodiment)

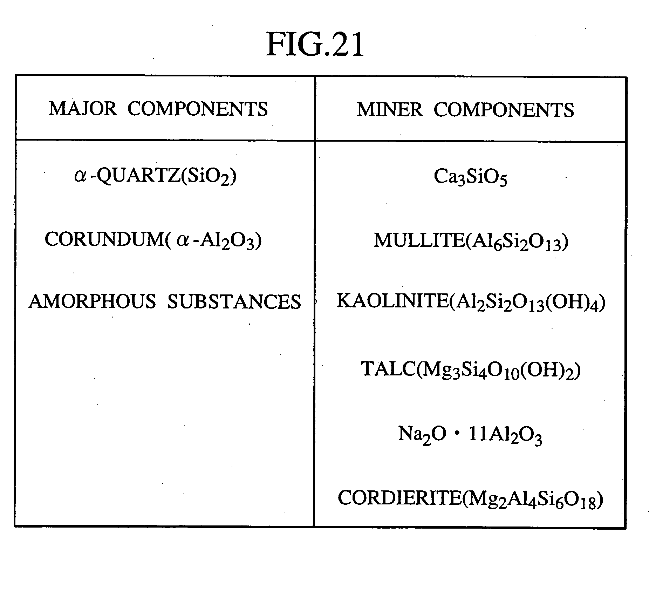

A heat-insulating material according to a fourth embodiment of the present invention includes SiO₂, α-Al₂O₃, and amorphous substances as maj or components. In addition, the heat-insulating material includes calcium silicate (CaSiO₅) , mullite (Al₆Si₂O₁₃), talc (Mg₃Si₄O₁₀(OH)₂), β-alumina (Na₂O·11Al₂O₃), cordierite (Mg₂Al₄Si₅O₁₈), and kaolinite which is a main' component of a plastic raw material, as minor components. Fig. 21 shows an example as a result of component identification which is obtained by filtrating and drying the heat-insulating material according to the fourth embodiment, then grinding the heat-insulating material for 5 minutes with the sample mill (TI-100, made by CMT Inc.), and then measuring contents with the X-ray analyzer RAD-rR made by Rikagaku Corporation.

The heat insulating material of the fourth embodiment, as a result of a fluorescent X-ray analysis in an incinerated state after drying at 105°C for 5 hours and heating at an ignition temperature of 700°C, includes Na in a range of from 0.1% to 10%, Mg in a range of from 0.01% to 0.1%, Al in a range of from 1% to 10%, Si in a range of from 10% to 30%, P in a range of from 0.001% to 0.5%, S in a range of from 0.01% to 0.5%, Cl in a range of from 0.01% to 1%, K in a range of from 0.1% to 15%, Ca in a range of from 0.01% to 0.5%, Ti in a range of from 0.01% to 5%, Cr in a range of from 0.1% to 5%, Mn in a range of from 0.1% to 5%, Fe in a range of from 0.1% to 5%, Co in a range of from 0.1% to 5%, and Ni in a range of from 0.1% to 5%.

The heat-insulating material further includes Zn in a range of from 0.001% to 0. 05%, Rb in a range of from 0.0010% to 0.05%, Sr in a range of from 0.001% to 0.05%, and Zr in a range of from 0.001% to 0.05%.

Here, Na is included preferably in a range of from 0.5% to 5.0%, and more preferably in a range of from 1% to 3%. Mg is included preferably in a range of from 0.01% to 0.1%, and more preferably in a range of from 0.02% to 0.07%. Al is included preferably in a range of from 0.5% to 8%, and more preferably in a range of from 1% to 6%.

Si is included preferably in a range of from 15% to 27%, and more preferably in a range of from 20% to 25%. P is included preferably in a range of from 0.005% to 0.05%, and more preferably in a range of from 0.006% to 0.02%. S is included preferably in a range of from 0.01% to 0.3%, and more preferably in a range of from 0.02% to 0.08%. Cl is included preferably in a range of from 0.05% to 0.8%, and more preferably in a range of from 0.08% to 0.2%.

K is included preferably in a range of from 2% to 13%, and more preferably in a range of from 5% to 10%. Ca is included preferably in a range of from 0.01% to 0.5%, and more preferably in a range of from 0.05% to 0.2%. Ti is included preferably in a range of from 0.01% to 3%, and more preferably in a range of from 0.05% to 0.2%.

Mn is included preferably in a range of from 0.5% to 3%, and more preferably in a range of from 0.8% to 2%. Fe is included preferably in a range of from 0.3% to 3%, and more preferably in a range of from 0.7% to 2.5%. Ni is included preferably in a range of from 0.2% to 3%, and more preferably in a range'of from 0.5% to 1.5%.

Zn is included preferably in a range of from 0.001% to 0.03%, and more preferably in a range of from 0.005 to 0.015%. Rb is included preferably in a range of from 0.001% to 0.03%, and more preferably in a range of from 0.005% to 0.015%. Sr is included preferably in a range of from 0.001% to 0.03%, and more preferably in a range of from 0.005% to 0.015%. Zr is included preferably in a range of from 0.001% to 0.03%, and more preferably in a range of from 0.005% to 0.02%.

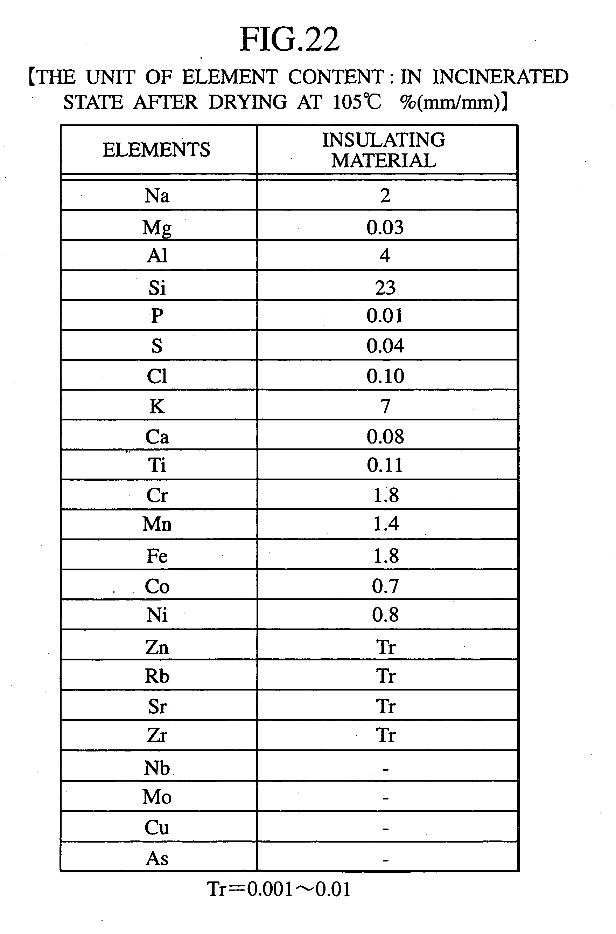

Fig. 22 shows typical numerical values (mass% (mm/mm) ) of the heat-insulating material according to the fourth embodiment. Here, the forgoing numerical values can be obtained by a qualitative analysis for elements having atomic numbers equal to or greater than 6 (carbon) using a fundamental parameter (FP) method. In Fig. 22, calculation is made on the assumption that a content of hydrogen is 0 mass%, and analytical values for carbon and oxygen are not indicated.

### <Heat radiation characteristic of the heat-insulating material>

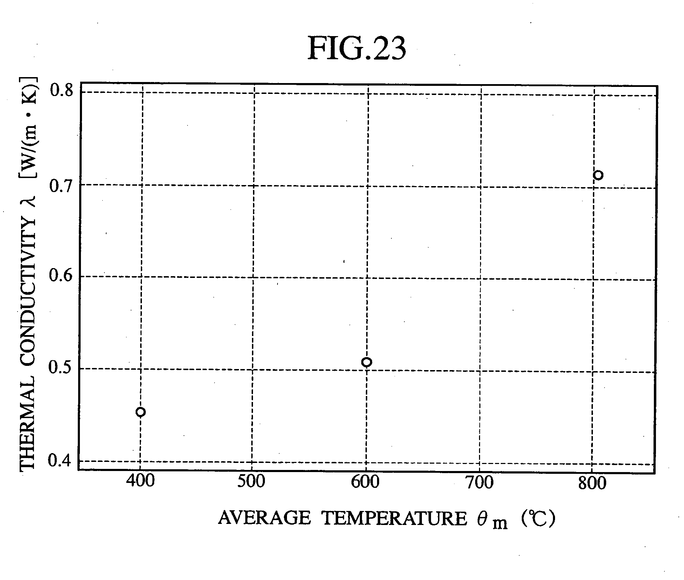

As shown in Fig. 23, thermal conductivity of the heat-insulating material according to the fourth embodiment is measured in accordance with JIS A1412-1 (method of measuring thermal resistance and thermal conductivity of a heat-insulating material (GHP method)). At an average temperature θₘ of 400 °C, thermal conductivity λ was 0.453 W/ (m·K). At an average temperature θₘ of 600 °C, thermal conductivity λ was 0.507 W/(m·K). At an average temperature θₘ of 800 °C, thermal conductivity λ was 0.717 W/ (m·K). Here, densities of heat flow rates q passing through a sample body were 232.8 W/m², 269.0 W/m², and 361.6 W/m² at the average temperatures θₘ of 400 °C, 600 °C, and 800 °C, respectively.

The heat-insulating material according to the fourth embodiment of the present invention radiates the applied heat as far infrared rays. Therefore, even if one of the surfaces of the heat-insulating material is exposed to a high temperature of about 1200°C, for example, it is possible to touch by hand the other surface not exposed to the high temperature because of the effective flow of thermal energy.

Moreover, the heat-insulating material according to the fourth embodiment has excellent thermal efficiency and heat resistance in a temperature range from about 1000°C and above, maybe in a range of 1000°C to 4200°C, and does not generate poisonous gases. Therefore, the heat-insulating material can be effectively used as a , building material.

### <Method of manufacturing the heat-insulating material>

Next, a method of manufacturing the heat-insulating material according to the fourth embodiment of the present invention will be described. Here, the method of manufacturing the heat-insulating material described below is only an example, and it is needless to say that various manufacturing methods are possible including modified examples thereof.

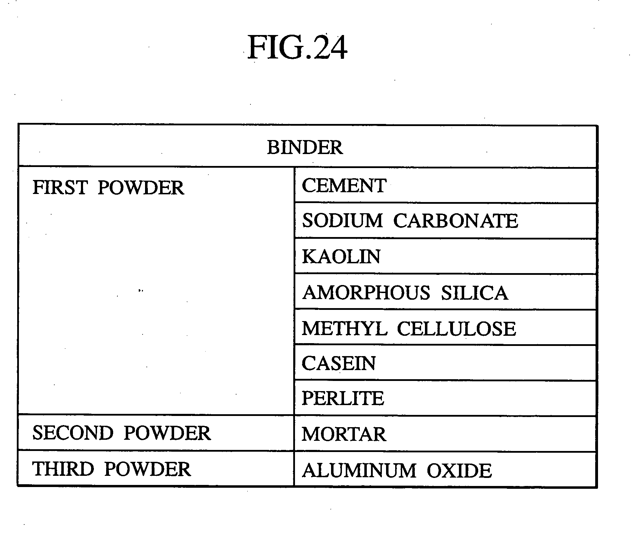

As shown in Fig. 24, for example, the heat-insulating material according to the fourth embodiment is made of a binder, first powder, second powder, and third powder. The binder is similar to the binder described in the third embodiment.
a) Firstly, 10 to 30 kg of cement, 0.5 to 1.5 kg of sodium carbonate, 5 to 15 kg of kaolin, 0.5 to 2 kg of amorphous silica, 0.3 to 2 kg of methylcellulose, 2 to 3 kg of casein, and 10 to 15 kg of perlite are put in a first mixing tank or other vessel and mixed together as the first powder. Then, 50 to 60 kg of refractory mortar as the second powder, and 50 to 60 kg of aluminum oxide as the third powder are added and the mixture is agitated for 30 to 50 minutes. A hardening agent of 2 to 3 kg is added to the first mixing tank and the mixture is agitated. Sodium silicofluoride is preferable as the hardening agent.
b) Then, 100 to 120 kg of the binder is prepared in a second mixing tank of vessel. The weight of the binder is preferably set to 50% to 65% of the total weight of the first to third powders. Subsequently, the binder is put in the first mixing tank in two divided amounts, and the mixture is agitated for 15 to 30 minutes.
c) After completing agitation, a gel substance obtained by mixing the binder, the first to third powder, and the hardening agent is poured into a molding box. The size, material, shape, and the like of the molding box is not particularly limited. The substance poured into the molding box is subjected to drying at a room temperature and is then taken out of the molding box. Thereafter, the substance is again subjected to drying at a room temperature for 7 to 14 days. It is also possible to subj ect the substance to hot-air drying a temperature range from 250°C to 300°C or to far-infrared drying a temperature range from 150°C to 200°C.

The heat-insulating material of the fourth embodiment is manufactured by the above-described processes. According to the method of manufacturing the heat-insulating material of the fourth embodiment, a high-temperature and high-pressure condition is not required at all, unlike refinement of firebricks. Therefore, it is possible to manufacture the heat-insulating material easily at a room temperature without requiring expert or complex techniques. Moreover, respective raw materials of the heat-insulating material according to the fourth embodiment are inexpensive and easy to prepare. Therefore, it is possible to reduce manufacturing costs.

### (Other Embodiments)

The metal coating material, the nonmetal coating material, the binder, and the heat-insulating material described in the first to fourth embodiments are applicable to an inner wall of a general incinerator and the like. For example, it is possible to provide an incinerator having high thermal efficiency by applying the metal coating material described in the first embodiment to a furnace wall to thereby form an applied film.

Moreover, the metal coating material according to the first embodiment can radiate heat supplied to the coating material as far infrared rays. Therefore, it is possible to suppress an uneven temperature increase during waste incineration, and to reduce generation of poisonous gases, such as dioxin. It is also possible to suppress generation of clinkers, slugs, or the like which adhere to the furnace wall of the incinerator.

In addition, when the metal coating material and the nonmetal coating material described in the first and second embodiments are applied to pipelines, other apparatuses, or the like to form the applied film, it is possible to prevent corrosion of coated materials attributable to salt damages and acid gases. For example, by applying the metal coating material according'to the first embodiment on an outer surface of a vessel, it is also possible to provide an applied film which can prevent adhesion of seaweed in the seawater.

Moreover, by providing the heat-insulating material according to the third embodiment in offices or houses, it may be possible to obtain a deodorizing effect and an effect of suppressing sick house syndrome.

## Claims

1. A coating material comprising:
sodium in a range of from 0.1% to 10%;
magnesium in a range of from 0.01% to 1%;
aluminum in a range of from 0.1% to 15%;
potassium in a range of from 1% to 30%;
silicon in a range of from 10% to 30%; and
iron in a range of from 0.1% to 1%.

2. The coating material of claim 1, further comprising:
strontium in a range of from 0.001% to 0.05%; and
zirconium in a range of from 0.001% to 0.05%.

3. The coating material of claim 1, further comprising:
phosphorus in a range of from 0.01% to 5.0%;
chlorine in a range of from 0.01% to 1.0%;
calcium in a range of from 0.1% to 10%;
titanium in a range of from 0.1% to 10%;
zinc in a range of from 0.1% to 10%; and
molybdenum in a range of from 0.1% to 5%.

4. The coating material of claim 1, further comprising:
phosphorus in a range of from 0.01% to 0.5%;
sulfur in a range of from 0.01% to 1.0%; and
titanium in a range of from 0.1% to 10%.

5. The coating material of claim 1, further comprising:
calcium in a range of from 0.01% to 5%;
chlorine in a range of from 0.01% to 1%; and
titanium in a range of from 0.01% to 5%.

6. The coating material of claim 1, wherein the sodium is in a range of from 0.5% to 5%, the magnesium is in a range of from 0.01% to 0.5%, the aluminum is in a range of from 1% to 15%, the potassium is in a range of 1% to 15%, silicon is in a range of 15% to 30%, and the iron is in a range of 0.15% to 0.8%, as a result of a fluorescent X-ray analysis in an incinerated state after drying.

7. The coating material of claim 1, wherein the sodium is in a range of from 0.7% to 1.5%, the magnesium is in a range of from 0.015% to 0.040%, the aluminum is in a range of from 2.5% to 6.5%, the potassium is in a range of 1% to 5%, silicon is in a range of 15% to 20%, and the iron is in a range of 0.05% to 0.30%, as a result of a fluorescent X-ray analysis in an incinerated state after drying.

8. The coating material of claim 1, wherein the sodium is in a range of from 1.0% to 3.0%, the magnesium is in a range of from 0.05% to 0.2%, the aluminum is in a range of from 0.8% to 4.0%, the potassium is in a range of 8.0% to 15%, silicon is in a range of 25% to 30%, and the iron is in a range of 0.3% to 0.9%, as a result of a fluorescent X-ray analysis in an incinerated state after drying.

9. The coating material of claim 1, wherein the sodium is in a range of from 1.0% to 3.0%, the magnesium is in a range of from 0.02% to 0.07%, the aluminum is in a range of from 1.0% to 6.0%, the potassium is in a range of 5.0% to 10%, silicon is in a range of 20% to 25%, and the iron is in a range of 0.7% to 1.0%, as a result of a fluorescent X-ray analysis in an incinerated state after drying.

10. The coating material of claim 1 comprising:
sodium in a range of from 4% to 8% in relation to silicon;
magnesium in a range of from 0. 1% to 0.5% in relation to silicon;
chlorine in a range of from 0.3% to 0.6% in relation to silicon; and
potassium in a range of from 0.1% to 0.5% in relation to silicon.

11. The coating material of claim 1 comprising:
sodium in a range of from 4.5% to 6% in relation to silicon;
magnesium in a range of from 0. 1% to 0.3% in relation to silicon;
chlorine in a range of from 0.4% to 0.6% in relation to silicon; and
potassium in a range of from 0.1% to 0.3% in relation to silicon.

12. A method of manufacturing a coating material comprising:
agitating a mixture of a nonmetal coating material and aluminum oxide powder in a mixing tank;
adding and agitating an adhesive including water, caustic soda, high-protein powder, polyvinyl acetate, and glycerin in the mixing tank;
adding and agitating ceramic powder in the mixing tank; and
grinding the mixture powder.

13. The method of claim 12, wherein the mixture powder is ground into particles having grain size in a range of from 0.15 to 200µm.

14. The method of claim 12, wherein the nonmetal coating material is made of a thickening agent including a binder and the adhesive, titanium oxide, kaolin, and a plastic raw material.

15. The method of claim 14, wherein the binder is made of sodium silicate, potassium silicate, silicon dioxide, amorphous silica, bentonite, and the plastic raw material.
